# EUROPÄISCHE PATENTANMELDUNG

(11) **EP 2 031 484 A1**
(43) Veröffentlichungstag der Anmeldung: **04.03.2009**
(21) Anmeldenummer: 08015336.4
(22) Anmeldetag: 29.08.2008
(51) Int. Cl.: G06F 3/02

(54) **Computertastatur**

(30) Priorität: 30.08.2007 DE 202007012129 U
(71) Anmelder: Tchibo GmbH, 22297 Hamburg (DE)
(72) Erfinder: Helfrich, Miguel, 22299 Hamburg (DE)
(74) Vertreter: UEXKÜLL & STOLBERG

(57) **Zusammenfassung**

Eine Computertastatur (1) weist ein Gehäuse (2) mit einer Oberseite (4), an der die Tasten (10, 11, 12) angeordnet sind, und einer Rückseite auf. Die Tasten (10, 11, 12) befinden sich zwischen einem vorderen Rand (6) und einem hinteren Rand (7) des Gehäuses (2). Im Bereich des vorderen Randes (6) oder des hinteren Randes (7) des Gehäuses (2) ist ein Bügel (14) angeordnet, der in Richtung Oberseite (4) des Gehäuses (2) in eine Standfußstellung schwenkbar ist. An der Rückseite des Gehäuses (2) befindet sich eine Anzeigeeinrichtung.

## Beschreibung

Die Erfindung betrifft eine Computertastatur.

Eine Computertastatur besitzt ein Gehäuse, an dessen Oberseite die Tasten zugänglich sind. Dies sind die Standardtasten (mit oder ohne zusätzlichem nummerischen Block an der rechten Seite) und in neuerer Zeit häufig zusätzliche Sonderfunktionstasten, z.B. zum schnellen Aufrufen von Internet-Funktionen. Die Signalübertragung zwischen der Computertastatur und einem zugeordneten Computer erfolgt über ein Kabel oder im Falle einer Funktastatur drahtlos.

Es ist Aufgabe der Erfindung, eine Computertastatur zu schaffen, die eine höheren Gebrauchswert hat als eine herkömmliche Computertastatur.

Diese Aufgabe wird gelöst durch eine Computertastatur mit den Merkmalen des Anspruchs 1. Vorteilhafte Ausgestaltungen der Erfindung ergeben sich aus den Unteransprüchen.

Die erfindungsgemäße Computertastatur hat ein Gehäuse mit einer Oberseite und einer Rückseite. Die Tasten sind an der Oberseite angeordnet, und zwar zwischen einem vorderen Rand des Gehäuses und einem hinteren Rand des Gehäuses. Der vordere Rand des Gehäuses ist der Rand, der im normalen Betrieb der Computertastatur dem Benutzer zugewandt ist.

Erfindungsgemäß ist ein Bügel vorgesehen, der im Bereich des vorderen oder vorzugsweise des hinteren Randes des Gehäuses angeordnet ist und schwenkbar mit dem Gehäuse verbunden ist. Der Bügel ist in Richtung Oberseite des Gehäuses in eine Standfußstellung schwenkbar. An der Rückseite des Gehäuses ist eine Anzeigeeinrichtung angeordnet.

Wenn der Bügel in Richtung Oberseite des Gehäuses verschwenkt ist (also nach oben weist, wenn die Computertastatur in normaler Gebrauchsstellung auf einem Tisch liegt), bilden der Bügel und der Randbereich des Gehäuses einen Standfuß, auf dem die Computertastatur aufgestellt werden kann, so dass die Rückseite sichtbar ist. In diesem Zustand kann ein Betrachter die Anzeigeeinrichtung sehen, die sich als Informationsträger nutzen lässt. Die Computertastatur kann somit als eine Art Informationstafel verwendet werden, wenn sie nicht für die normale Computerarbeit benötigt wird. Zum Beispiel kann der Computernutzer bei einer Unterbrechung seiner Tätigkeit auf der Anzeigeeinrichtung angeben, wo er sich gerade befindet.

Bei einer bevorzugten Ausführungsform der Erfindung weist die Anzeigeeinrichtung einen Bilderhalter auf, der vorzugsweise mindestens ein durchsichtige Abdeckung enthält, die zwischen einer Haltestellung und einer Zugangsstellung bewegbar ist. In der Haltestellung ist die Abdeckung zum Halten mindestens eines flachen Gegenstandes eingerichtet, z.B. eines Stücks Papier oder eines Fotos. Die Zugangsstellung ermöglicht ein Zuführen des Gegenstands, also z.B. das Einlegen oder Anbringen des Fotos. Vorzugsweise ist die Abdeckung schwenkbar an der Rückseite des Gehäuses angeordnet und in der Haltestellung gegen die Rückseite des Gehäuses geklappt und in der Zugangsstellung von der Rückseite des Gehäuses weggeschwenkt. Um z.B. ein Foto an der Rückseite der Computertastatur anzubringen, schwenkt der Anwender die Abdeckung in die Zugangsstellung, legt das Foto ein und klappt anschließend die Abdeckung gegen die Rückseite des Gehäuses, so dass das Foto in der Haltestellung der Abdeckung befestigt ist. Um die Abdeckung in der Haltestellung festzulegen, kann eine Verschlusseinrichtung vorgesehen sein, z.B. eine Raste oder ein schwenkbarer Clip. Es ist auch denkbar, dass die Abdeckung durch Federkraft gegen die Rückseite des Gehäuses gedrückt wird.

Die Abdeckung kann eine Unterteilung aufweisen, wodurch zwei nebeneinander liegende Felder für zwei unabhängige flache Gegenstände definiert sind. Dies ermöglicht eine flexiblere Nutzung des Bilderhalters.

Die Rückseite des Gehäuses kann im Bereich der Abdeckung mit einer Vertiefung zur Aufnahme des flachen Gegenstandes versehen sein. Auch die Abdeckung lässt sich in dieser Vertiefung anordnen, z.B., wenn sie nicht in Bezug auf die übrige Rückseite der Computertastatur vorspringen soll.

Bei einer anderen Ausgestaltung der Erfindung weist die Anzeigeeinrichtung einen Display auf, z.B. einen LCD-Display. Vorzugsweise wird dieser Display über den der Computertastatur zugeordneten Computer angesprochen, so dass der Display eine vorgewählte Information anzeigen kann. Eine Kombination von Display und mechanischem Bilderhalter ist ebenfalls denkbar.

Bei einer bevorzugten Ausführungsform der Erfindung ist der Bügel nicht nur in eine Standfußstellung schwenkbar, sondern kann auch in Richtung Rückseite des Gehäuses verschwenkt werden, so dass er bei normaler Gebrauchsstellung der Computertastatur nach unten oder schräg nach unten weist. In dieser Stellung lässt sich der Bügel zum Einrichten der Neigung der Computertastatur nutzen.

Vorzugsweise ist der Bügel in seiner Schwenkstellung arretierbar. Dies lässt sich z.B. mit einer Serie von Rasten oder mit einer Klemmschraube erreichen. Alternativ dazu kann der Bügel schwergängig sein, so dass er sich nicht ohne weiteres aus einer vorgegebenen Schwenkstellung dreht.

Vorzugsweise ist die Computertastatur als Funktastatur eingerichtet. In diesem Fall entfällt ein Zuleitungskabel, das bei der Benutzung der Anzeigeeinrichtung stören würde.

Die erfindungsgemäße Computertastatur kann somit auch als eine Art Anzeigetafel benutzt werden, die immer zur Hand ist, weil die Computertastatur einem Computer und meist einem festen Anwender zugeordnet ist. Wenn die Anzeigeeinrichtung einen Bilderhalter aufweist, lässt sich die Computertastatur preisgünstig herstellen. Ein LCD-Display als Anzeigeeinrichtung ist zwar teurer, eröffnet aber eine Vielzahl zusätzlicher Nutzungsmöglichkeiten.

Im Folgenden wird die Erfindung anhand eines Ausführungsbeispiels näher beschrieben. Die Zeichnungen zeigen in
- Figur 1: eine Draufsicht auf die Oberseite einer Ausführungsform der erfindungsgemäßen Computertastatur,
- Figur 2: eine Draufsicht auf die Rückseite der Computertastatur aus Figur 1,
- Figur 3: Seitenansichten der Computertastatur gemäß Figur 1, und zwar in Teil (a) einen Zustand, in dem ein an dem Gehäuse der Computertastatur angeordneter Bügel nicht verschwenkt ist, in Teil (b) einen Zustand, in dem der Bügel in eine Neigungseinrichtungsstellung verschwenkt ist und in Teil (c) einen Zustand, in dem der Bügel in eine Standfußstellung verschwenkt ist, und
- Figur 4: eine Seitenansicht der Computertastatur gemäß Figur 1 in einem aufgerichteten Zustand.

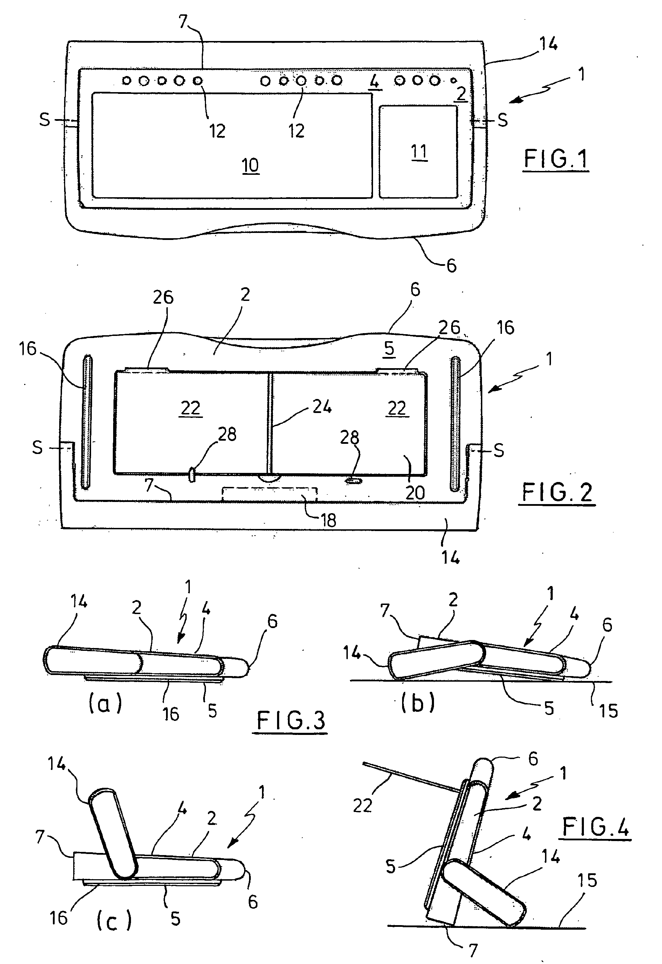

In Figur 1 ist eine Ausführungsform einer Computertastatur 1 in Draufsicht dargestellt. Die Computertastatur 1 weist ein Gehäuse 2 mit einer Oberseite 4 und einer Rückseite 5 (siehe Figur 2) auf. Zwischen einem vorderen Rand 6 und einem hinteren Rand 7 des Gehäuses 2 sind Tasten angeordnet, und zwar in einem Tastenfeld 10, in einem nummerischen Block 11 und in Form von Sondertasten 12. Die Tasten 10, 11, 12 sind von der Oberseite 4 des Gehäuses 2 her zugänglich.

Im Bereich des hinteren Randes 7 ist ein Bügel 14 angeordnet, der zwei zu den Schmalseiten des Gehäuses 2 reichende Schenkel aufweist, an denen der Bügel 14 schwenkbar mit dem Gehäuse 2 verbunden ist. Die Schwenkachse ist mit S-S bezeichnet und in den Figuren 1 und 2 angedeutet.

Der Bügel 14 kann im Ausführungsbeispiel in Richtung der Oberseite 4 des Gehäuses 2 und in Richtung der Rückseite 5 des Gehäuses 2 geschwenkt werden. Die Figur 3 zeigt in Teil (a) einen Zustand, in dem der Bügel 14 nicht verschwenkt, sondern mit der Oberseite 4 des Gehäuses 2 ausgerichtet ist. In diesem Zustand kann die Computertastatur 1 auf einen Tisch gelegt und in üblicher Weise benutzt werden. Wenn ein größerer Neigungswinkel erwünscht ist, kann der Bügel 14 in Richtung auf die Rückseite 5 des Gehäuses 2 zu geschwenkt werden, wie im Teil (b) der Figur 3 dargestellt. In Figur 3(b) ist auch eine Tischplatte 15 angedeutet.

Der Bügel 14 lässt sich außerdem in Richtung der Oberseite 4 des Gehäuses 2 schwenken, siehe Figur 3(c). Er nimmt dann eine Standfußstellung ein und kann zusammen mit dem hinteren Rand 7 des Gehäuses 2 zum Aufstellen der Computertastatur 1 genutzt werden, so dass die Rückseite 5 des Gehäuses 2 sichtbar wird. Ein solcher Zustand ist in Figur 4 veranschaulicht.

Im Ausführungsbeispiel sind zum Arretieren des Bügels 14 in den drei in Figur 3 dargestellten Zuständen federnde Rasten vorgesehen, was in den Figuren im Einzelnen nicht dargestellt ist. Andere Möglichkeiten für eine Arretiereinrichtung des Bügels sind ebenfalls denkbar, auch mit einer größeren Zahl von Zwischenstufen. Eine stufenlose Verstellbarkeit lässt sich z.B. erreichen, wenn zum Schwenken des Bügels relativ hohe Reibungskräfte überwunden werden müssen.

In Figur 2 ist die Rückseite 5 des Gehäuses 2 in Draufsicht dargestellt. Man erkennt zwei seitliche Standfüße 16. Da die Computertastatur 1 im Ausführungsbeispiel als Funktastatur eingerichtet ist, ist ein Batteriefach 18 vorgesehen.

Den größten Teil der Rückseite 5 des Gehäuses 2 nimmt eine Anzeigeeinrichtung 20 ein. Die Anzeigeeinrichtung 20 weist eine Acrylglasplatte 22 mit einer Unterteilung 24 auf, die über zwei Drehgelenke 26 mit dem Gehäuse 2 verbunden ist. Wie in Figur 4 veranschaulicht, kann die Acrylglasplatte 22 aufgeklappt werden, um z.B. ein Foto oder zwei Fotos oder ein Stück Papier mit einer Notiz in eine flache Mulde an der Rückseite 5 des Gehäuses 2 einzulegen. Wenn die Acrylglasplatte 22 anschließend wieder auf die Rückseite 5 des Gehäuses 2 geschwenkt und dann mit zwei drehbaren Feststellern 28 (siehe Figur 2) arretiert wird, sind die in die flache Mulde eingelegten Gegenstände praktisch unverrückbar festgelegt. Wenn die Computertastatur so aufgestellt ist wie in Figur 4, können sie von einem Betrachter gesehen werden.

Die Computertastatur 1 lässt sich auf diese Weise als eine Art Wechselrahmen verwenden, wenn sie nicht für die Computerarbeit benutzt wird. Wie gesehen, können anstelle von Bildern z.B. auch Papierstücke mit Notizen in die Anzeigeeinrichtung 20 eingelegt werden, z.B. mit einem Hinweis auf den derzeitigen Aufenthaltsort des Benutzers der Computertastatur 1.

Bei einer weiteren Ausführungsform, die in den Figuren nicht dargestellt ist, ist die Anzeigeeinrichtung 20 nicht als Bilderhalter mit einer Acrylglasplatte 22 ausgestattet, sondern enthält einen LCD-Display, z.B. mit ähnlichen Ausmaßen wie die Acrylglasplatte 22 in Figur 2. Der LCD-Display kann über den Computer angesteuert werden, dem die Computertastatur zugeordnet ist.

## Patentansprüche

1. Computertastatur, mit einem Gehäuse (2), das eine Oberseite (4), an der die Tasten (10, 11, 12) angeordnet sind, und eine Rückseite (5) aufweist, wobei die Tasten (10, 11, 12) zwischen einem vorderen Rand (6) des Gehäuses (2) und einem hinteren Rand (7) des Gehäuses (2) angeordnet sind, **gekennzeichnet**
- **durch** einen Bügel (14), der im Bereich des vorderen Randes (6) oder des hinteren Randes (7) des Gehäuses (2) angeordnet ist, vorzugsweise im Bereich des hinteren Randes (7), und schwenkbar mit dem Gehäuse (2) verbunden ist, wobei der Bügel in Richtung Oberseite (4) des Gehäuses (2) in eine Standfußstellung schwenkbar ist, und
- **durch** eine Anzeigeeinrichtung (20) an der Rückseite (5) des Gehäuses (2).

2. Computertastatur nach Anspruch 1, **dadurch gekennzeichnet, dass** die Anzeigeeinrichtung (20) einen Bilderhalter (20) aufweist.

3. Computertastatur nach Anspruch 2, **dadurch gekennzeichnet, dass** der Bilderhalter (20) mindestens eine durchsichtige Abdeckung (22) aufweist, die zwischen einer Haltestellung, in der die Abdeckung (22) zum Halten mindestens eines flachen Gegenstandes eingerichtet ist, z.B. eines Stücks Papier oder eines Fotos, und einer Zugangsstellung, die ein Zuführen des flachen Gegenstands ermöglicht, bewegbar ist.

4. Computertastatur nach Anspruch 3, **dadurch gekennzeichnet, dass** die Abdeckung (22) schwenkbar an der Rückseite (5) des Gehäuses (2) angeordnet ist und in der Haltestellung gegen die Rückseite (5) des Gehäuses (2) geklappt und in der Zugangsstellung von der Rückseite (5) des Gehäuses (2) weg geschwenkt ist.

5. Computertastatur nach Anspruch 4, **gekennzeichnet durch** eine Verschlusseinrichtung (28), die dazu eingerichtet ist, die Abdeckung (22) in der Haltestellung festzulegen.

6. Computertastatur nach einem der Ansprüche 3 bis 5, **dadurch gekennzeichnet, dass** die Abdeckung (22) eine Unterteilung (24) aufweist, wodurch zwei nebeneinanderliegende Felder für zwei unabhängige flache Gegenstände definiert sind.

7. Computertastatur nach einem der Ansprüche 3 bis 6, **dadurch gekennzeichnet, dass** die Rückseite (5) des Gehäuses (2) im Bereich der Abdeckung (22) mit einer Vertiefung zur Aufnahme des flachen Gegenstands versehen ist.

8. Computertastatur nach Anspruch 1, **dadurch gekennzeichnet, dass** die Anzeigeeinrichtung einen Display aufweist, vorzugsweise einen LCD-Display.

9. Computertastatur nach einem der Ansprüche 1 bis 8, **dadurch gekennzeichnet, dass** der Bügel (14) in Richtung Rückseite (5) des Gehäuses (2) in eine Neigungseinrichtungsstellung schwenkbar ist.

10. Computertastatur nach einem der Ansprüche 1 bis 9, **dadurch gekennzeichnet, dass** der Bügel (14) in seiner Schwenkstellung arretierbar ist.

11. Computertastatur nach einem der Ansprüche 1 bis 10, **dadurch gekennzeichnet, dass** die Computertastatur (1) als Funktastatur eingerichtet ist.
